Europäisches Patentamt

European Patent Office

Office européen des brevets

(11) Publication number: **0 219 340**
A2

# (12) EUROPEAN PATENT APPLICATION

(21) Application number: **86307916.6**

(22) Date of filing: **14.10.86**

(51) Int. Cl.⁴: **G 01 S 3/80**
**G 01 S 15/02**

(30) Priority: **14.10.85 GB 8525295**

(43) Date of publication of application:
**22.04.87 Bulletin 87/17**

(84) Designated Contracting States:
**AT BE CH DE ES FR GR IT LI LU NL SE**

(71) Applicant: **GEC AVIONICS LIMITED**
**Airport Works**
**Rochester Kent ME1 2XX(GB)**

(72) Inventor: **Glasgow, John Arthur**
**30 Johnson Road Great Baddow**
**Chelmsford Essex(GB)**

(74) Representative: **Tolfree, Roger Keith**
**GEC p.l.c. Central Patent Department Chelmsford Office**
**Marconi Research Centre West Hanningfield Road**
**Great Baddow Chelmsford Essex CM2 8HN(GB)**

(54) Acoustic direction finder for use as an active responder.

(57) The time delay in arrival of sound from a target at two sensors is measured. A similar delay is then imposed on transmission of sound from the same sensors so that the transmission takes place primarily in the direction of the target.

I/7165/ABA

## An Acoustic Device

This invention relates to an acoustic device. The use of tri-plane corner reflectors in optics (cat's eyes) and in radar to give a return signal in this direction from where it came, is a well known and useful technique. However the use of such techniques with acoustic systems is normally considered impractical due to the size of the corner reflector that is required. This invention enables an effect similar to a retro-reflector to be obtained but with, if required, a higher level of returned signal that would be obtainable with a conventional reflector of practical size. Such a device will be useful for enhancing the signal return from dummy-target drones, responder systems as with secondary radar and for devices incorporating both passive and active means of detecting and monitoring targets. The latter application could be for some machine that works as a form of sentry operating passively by listening for intruders or unwanted vehicles and when their presence is detected, becomes active to measure the range or some other target attribute. The disclosed technique will automatically send the active 'beam' in the direction of the received signal in preference to other directions.

According to this invention in its broadest aspect there is provided an apparatus for receiving signals, determining their direction of arrival and transmitting signals preferentially in that direction.

More particularly the invention provides an acoustic device comprising at least two sound tranceivers means for detecting a time delay between arrival of sound from a source at the sensors, this time delay being indicative of the direction of the source, means for transmitting a signal from the tranceivers, and means for imposing a delay equal to the aforementioned delay on the signal fed to one of the sensors so that the transmitted signal is transmitted primarily in the direction of the source.

With just two tranceivers, ambiguity of direction can arise. At least three tranceivers are thus preferred to define the direction unambiguously in a given place, and at least four for three dimensions.

As a matter of convenience a particular system will be described as operating in a plane but it is to be noted that by a simple extension of the concept, operation in three dimensional space may be readily visualized.

Apparatus constructed in accordance with the invention preferably includes a set of transducers that may be operated as microphones and loudspeakers and lie within a plane. In such a system the signal or noise from some other point in the plane is detected by the microphones and the signal at each one is preferably amplified separately in a corresponding set of amplifiers. The outputs of the amplifiers are preferably cross correlated one with another in pairs so that the times of arrival of the signal at each sensor may be determined relative to the time of arrival at each other sensor. From a consideration of the geometrical layout of the sensor and the relative times of arrival or more specifically the relative delays associated with the times of arrival, the direction of the incoming signal may be determined.

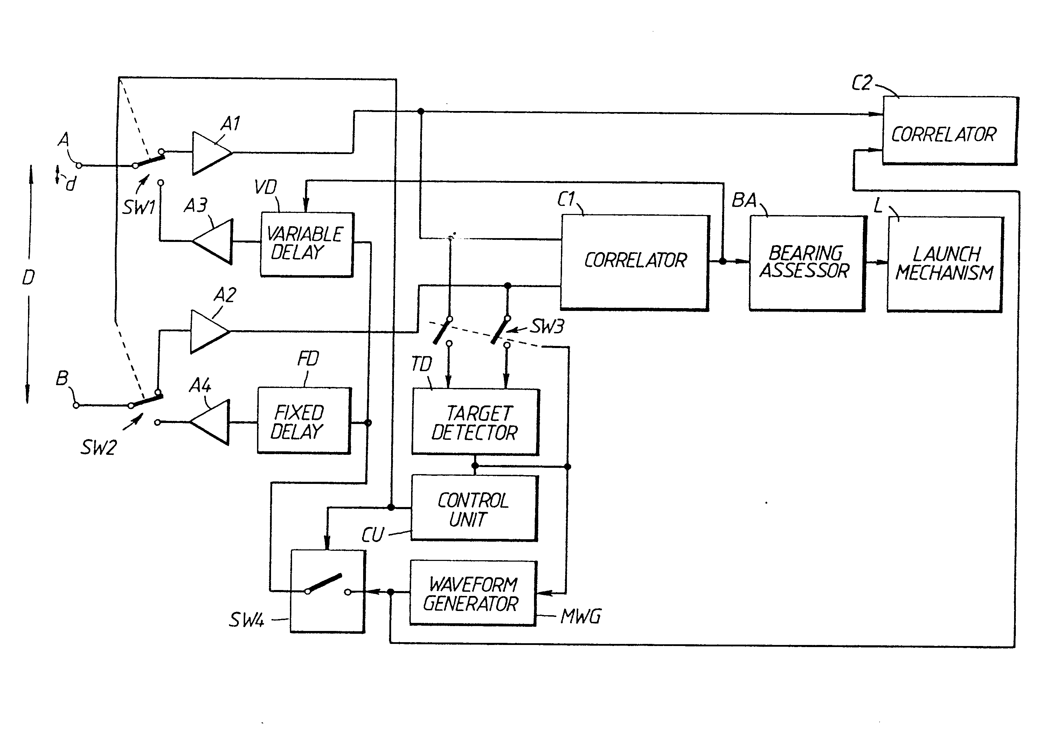

One way in which the invention may be performed will now be described by way of example with reference to the accompanying drawing of a control system constructed in accordance with the invention for launching a missile towards a target.

The illustrated apparatus normally adopts a passive mode of operation during which sensors A and B, which may be microphones or hydraphones, receive ambient noise. The switches SW1 and SW2 are in the illustrated position and received signals are passed to amplifiers A1 and A2. These amplifiers are notably able to pass a wide band signal by which term is meant a signal corresponding to wavelengths spread throughout the range D to d. D is the approximate distance of separation of the two sensors A and B and d is a small fraction of that distance, typically 1/10 of it. The amplified signals are correlated by a correlator Cl, which measures the difference in time of arrival of a signal at A and B. This time difference together with a knowledge of the velocity of sound and the distance of separation of points A and B is used in a bearing assessor BA to determine the direction of the source of noise.

The outputs of both of the amplifiers eg. A2 are passed through a switch SW3 to a target detection circuit TD which makes a decision that a target is present when the average of the amplitudes of its inputs exceeds a certain threshold. In response to such a threshold crossing the circuit TD produces an output signal lasting a predetermined duration during which the apparatus adopts an active mode. An output signal from the target detector TD opens the switch SW3 and switches on a multifrequency waveform generator MWG which produces a noise-like signal containing components throughout the wide band which has previously been mentioned.

The output from TD also causes a control unit CU to produce pulses each of which changes the positions of switches SW1 and SW2 to their other states and each of which closes a switch SW4 which acts as a pulse modulator to pass pulses from the output of the generator MWG. These pulses pass through amplifiers A3 and A4, through variable and fixed delay devices VD and FD; through the switches SW1 and SW2; and finally to the elements A and B which operate as transmitters.

The variable delay VD is controlled by the correlator C1 so as to impose a relative delay on the signal transmitted from A and B equal to the measured delay of the received signal at A relative to B. In this way the direction of transmission is made to be the same direction of the target, an advantage from the point of view of efficiency and of covertness of operation.

During the intervals between transmitted pulses the receiving circuitry receives an enhanced signal and the directional information is more reliable. Also during these periods range information is obtained from a correlator C2 which correlates the transmitted and received signals and establishes the time difference between them and therefore the range of the target. This range information at the output of correlator C2 together with the bearing information from the output of the bearing assessor BA is passed to a launching mechanism L to launch a missile towards the target at the specified bearing and range.

CLAIMS

1.    An   acoustic device comprising at least two sound tranceivers  means for detecting a time  delay  between arrival of sound from a source at the sensors this time delay  being indicative of the direction of the source, means  for transmitting a signal from the  tranceivers, and   means   for  imposing  a  delay  equal  to   the aforementioned  delay on the signal fed to one  of  the sensors  so that the  transmitted signal is transmitted primarily in the direction of the source.

2.    An acoustic device according to claim 1 including at least three sensors.

0219340

1/1